# FASCICULE DE BREVET EUROPEEN

(11) **EP 3 760 825 B1**
(45) Date de publication et mention de la délivrance du brevet: **24.04.2024**
(21) Numéro de dépôt: 20479001.8
(22) Date de dépôt: 07.07.2020
(51) Int. Cl.: E06B 9/36, E06B 9/386, D04B 21/00

(54) **DISPOSITIF D'ABSORPTION ACOUSTIQUE**
SCHALLABSORPTIONSVORRICHTUNG
ACOUSTIC ABSORPTION DEVICE

(30) Priorité: 04.07.2019 FR 1907484
(43) Date de publication de la demande: 06.01.2021
(73) Titulaire: TEXAA, 33170 Gradignan (FR)
(72) Inventeur: LALANNE, Fabrice, 33300 Bordeaux (FR); CALVET, Arnaud, 33170 Gradignan (FR); MARTIN, Guillaume, 38110 Saint Clair de la Tour (FR)
(74) Mandataire: Ipside

(56) Documents cités:
- EP-A1- 2 960 389
- JP-B2- 4 991 959
- US-A- 4 645 704
- US-A1- 2012 168 095

## Description

### DOMAINE DE L'INVENTION

La présente invention concerne les dispositifs d'absorption acoustique et occultant comportant des bandes verticales ou des panneaux verticaux réalisés dans un matériau absorbant dans un plan acoustique tel qu'un store ou un panneau cloison. Plus particulièrement, l'invention concerne un dispositif d'absorption acoustique et occultant d'épaisseur réduite présentant une faible réaction au feu et des caractéristiques optimales d'absorption acoustique et d'occultation.

### ÉTAT DE LA TECHNIQUE

Il est connu de l'art antérieur d'utiliser des stores verticaux pour tamiser la lumière des ouvertures extérieures tel qu'une vitre, ou de créer des séparations d'espace modulables lorsque le store, ou bien un panneau cloison est placé au milieu d'une salle. L'utilisation de stores comportant des propriétés acoustiques permet en outre de corriger l'acoustique interne d'une salle en réduisant la réverbération. Ces stores sont particulièrement utiles pour corriger l'acoustique des salles avec un niveau élevé de réverbération comme les salles polyvalentes, les salles de conférences, les restaurants, les bureaux partagés sur un espace ouvert, les salles de réunion, les salles de classe etc.

Le brevet Européen N° EP 0045711 décrit par exemple un store à bandes verticales dans lequel chaque bande est constituée d'un sandwich, une couche centrale du sandwich correspondant à un matériau absorbant telle qu'une mousse à cellules ouvertes ou un matériau très aéré comme un molleton ou une ouate. Deux couches externes recouvrent d'un côté et d'un autre la couche centrale, ces couches externes sont réalisées dans un tissu aéré permettant de transmettre les ondes sonores à la couche centrale absorbante et de la recouvrir de manière esthétique. Le matériau préféré pour la couche absorbante est une mousse de polyuréthane, un matériau largement utilisé pour ses propriétés en isolation thermique et en absorption acoustique.

Cependant, une couche absorbante en mousse de polyuréthane requiert une épaisseur d'environ 10 mm pour présenter un coefficient d'absorption satisfaisant, une épaisseur qui présente des inconvénients d'un point de vue esthétique et de souplesse des bandes du store. De plus, le polyuréthane a une empreinte écologique défavorable au vu de sa production très consommatrice en énergie, la difficulté de son recyclage en fin de vie et la production de vapeurs toxiques lors d'un incendie.

### EXPOSÉ DE L'INVENTION

Le but de la présente invention est de proposer un dispositif d'absorption acoustique et occultant constitué d'un matériau multicouche d'épaisseur réduite présentant une faible réaction au feu en position verticale et un aspect extérieur textile esthétique.

Un autre but de l'invention consiste en ce que le dispositif d'absorption acoustique présente des caractéristiques optimales d'absorption acoustique, d'occultation et de réflexion thermique.

À cette fin, l'invention propose un dispositif d'absorption acoustique et occultant comportant au moins une bande verticale, ou un panneau vertical réalisé dans un matériau comportant au moins trois couches structurelles, une couche centrale réalisée dans un matériau absorbant acoustique, et deux couches externes réalisées dans un matériau tricoté présentant une transparence acoustique, lesdites couches externes étant rapportées d'une part et de l'autre de la couche centrale. Le store de l'invention étant particulier en ce que :
- les deux couches externes sont réalisées à partir de fils de fibres de polyester ignifugé ;
- la couche centrale absorbante est réalisé en feutre de polyester comportant comme composant majoritaire des fibres de polyester
et en ce qu'une épaisseur d'assemblage desdites trois couches structurelles est inférieur à 7 mm.

Le dispositif d'absorption acoustique de l'invention est par exemple un store comportant au moins une bande verticale ou un panneau cloison de type japonais.

Chaque bande ou panneau du dispositif de l'invention comporte donc une structure en sandwich dans laquelle les couches extérieures sont réalisées dans un tricot perméable au son et recouvrent une couche centrale absorbante de manière esthétique. En particulier, l'invention propose d'utiliser la même composition de fibres dans les couches externes et dans la couche interne, et de contrôler les propriétés acoustiques desdites couches par leurs caractéristiques structurelles.

D'une part, l'utilisation d'un tricot présentant une grande transparence aux sons comme couches externes permet à la couche centrale d'absorber aisément les ondes acoustiques au contact du dispositif. D'autre part, la réalisation des couches externes et de la couche centrale à partir du même type de fibres, c'est-à-dire du polyester, est très avantageuse car elle procure au dispositif une faible réaction au feu et des caractéristiques d'absorption et d'occultation optimales avec une épaisseur de bande ou de panneau réduite.

Selon l'invention, la couche centrale est réalisée en feutre de polyester. L'utilisation du feutre permet d'obtenir un coefficient d'absorption optimal, tout en assurant un bon rapport de rigidité/souplesse du dispositif d'absorption acoustique. De plus, l'utilisation du feutre assure également des propriétés de réflexion thermique au dispositif d'absorption acoustique de l'invention.

Dans des modes de réalisation préférés, le dispositif d'absorption acoustique de l'invention peut comporter toutes ou partie des caractéristiques suivantes dans toute combinaison techniquement opérable :
- La couche centrale est réalisée à partir de fibres de polyester non-ignifugé ou à partir de fibres de polyester ignifugé.
- La couche centrale présente une épaisseur de 0,15 à 5 mm, et les couches externes présentent une épaisseur de 1 à 1,5 mm ;
- La couche centrale présente une épaisseur de 3 mm ;
- Le dispositif présente un coefficient d'absorption α_{w} d'au moins 0,40 ;
- Les couches externes sont constituées d'un tricot chaîne ou Rachel obtenu sur quatre barres avec deux fils de fond alimentant la première passette (notation Rachel) et deux fils d'aspect alimentant les deuxième et troisième passettes (II et III) ;
- Les couches externes sont intrinsèquement ignifugées et comportent un revêtement externe déperlant ;
- Le dispositif d'absorption acoustique de l'invention est un store comportant un rail de suspension comportant au moins une fixation par clipsage mobile maintenant ladite au moins une bande verticale, et pour lequel une distance d'écartement entre une extrémité inférieure du rail de suspension et une extrémité supérieure de l'au moins une bande verticale est égale ou inférieure à 5 mm. Ce mode de réalisation permet d'optimiser les performances du store en occultation, en absorption acoustique et en réflexion thermique.
- Le store comporte une barrette de fixation de forme sensiblement rectangulaire et comportant, dans une extrémité supérieure, un dégagement central pourvu de parois obliques ouvertes et une lumière de clipsage située en dessous dudit dégagement central. En particulier, la lumière de clipsage située dans une aire interne de la barrette permet une fixation haute des bandes du store.
- Chaque bande verticale du store comporte un ourlet supérieur dans lequel est insérée ladite barrette de fixation, ledit ourlet étant pourvu d'une ouverture centrale se superposant avec la lumière de clipsage et le dégagement central de la barrette.

### PRÉSENTATION DES FIGURES

D'autres données, caractéristiques et avantages de la présente invention apparaîtront à la lecture de la description non limitée qui suit, en référence aux figures annexées qui représentent, respectivement :
[Figure 1] Une représentation schématique de la structure multicouche d'une bande ou panneau du dispositif d'absorption acoustique de l'invention.
Figure 2] Une représentation simplifiée d'un store comportant un rail de fixation et une pluralité de bandes verticales suspendues audit rail selon l'invention.
[Figure 3] Une illustration d'une barrette de fixation selon l'invention.
[Figure 4] Une représentation schématique de la barrette de fixation en cours d'insertion dans une bande du store de l'invention.

### DESCRIPTION DÉTAILLÉE

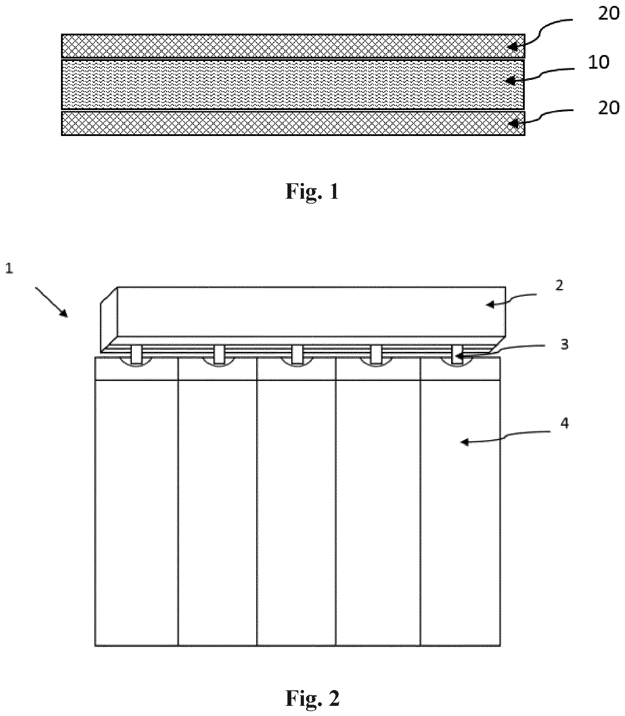

L'invention concerne un dispositif d'absorption acoustique et occultant présentant au moins une bande verticale ou un panneau vertical de surface essentiellement plate comportant une structure multicouche en sandwich. Le dispositif d'absorption acoustique de l'invention est un élément d'aménagement d'intérieurs, par exemple, un store comportant une pluralité de bandes verticales mobiles sur un rail, ou un store d'une seule bande s'enroulant et déroulant sur un axe horizontal, ou un panneau cloison de type japonais déterminant une limitation d'espace ou une porte coulissante. La figure 1 illustre la disposition des couches du dispositif d'absorption acoustique 1 de l'invention dans laquelle deux couches externes 20 sont rapportées d'un côté et de l'autre d'une couche centrale 10 absorbante.

Les couches externes 20 sont réalisées dans un matériau aéré tricoté dont une ouverture de maille permet d'assurer un caractère transonore (transparence acoustique) au matériau, et d'autre part apporte un aspect textile esthétique à l'extérieur du produit.

Le problème technique de la présente invention a été de sélectionner les matériaux des couches externes et de la couche centrale absorbante permettant de réaliser un assemblage d'épaisseur réduite, et ayant une conformité à la norme de réaction au feu pour des produits d'aménagement intérieur disposés en position verticale suivant la classification Européenne (Euroclasses) ou la classification Française. Bien entendu, l'assemblage de matériaux doit également présenter des caractéristiques performantes en termes d'absorption acoustique, occultation, et présenter un aspect esthétique.

À cette fin, la réaction au feu de différents matériaux a été testée suite à son assemblage avec les couches externes au moyen d'une colle vinylique. En particulier, les matériaux ont été sélectionnés pour leurs propriétés absorbantes acoustiques et leur classement en réaction au feu amélioré suite à un traitement ignifuge. En outre, les matériaux suivants ont été testés : polyuréthane, coton, verre, laine, viscose, polyester, méta-aramide, modacrylique.

La réaction au feu est la manière dont un matériau se comporte quand il est exposé à une source de chaleur selon un classement établi par des essais normalisés. Par exemple, la Classification Française (Norme NF P.92.507) classifie les matériaux dans cinq catégories allant de M0 à M4, M0 étant le plus difficilement inflammable et M4 le plus facilement inflammable.

La classification européenne (Norme EN 13501-1) classifie les matériaux dans 6 catégories allant de A à F et remplaçant les catégories M0 à M4. Elle prend également en compte le dégagement de fumée (s1, s2, s3) et la projection de gouttes enflammées (d0, d1, d2). Le tableau 1 ci-dessous montre les équivalences entre les deux classements pour des produits autres que les sols.

**[Tableau 1]**

| Classes selon NF EN 13501-1 | | | Exigence |
|---|---|---|---|
| A1 | - | - | Incombustible |
| A2 | s1 | d0 | M0 |
| A2 | s1 | d1 (1) | M1 |
| A2 | s2 | d0 | |
| | s3 | d1 (1) | |
| B | s1 | d0 | |
| | s2 | d1 (1) | |
| | s3 | | |
| C (3) | s1 (2) (3) | d0 | M2 |
| | s2 (3) | d1 (1) | |
| | s3 (3) | | |
| D | s1 (2) | d0 | M3 |
| | s2 | d1 (1) | M4 (non gouttant) |
| | s3 | | |
| Toutes classes (2) autres que E-d2 et F | | | M4 |
| (1) Le niveau de performance d1 est accepté uniquement pour les produits qui ne sont pas thermofusibles dans les conditions de l'essai. | | | |
| (2) Le niveau de performance s1 dispense de fournir les informations prévues par l'arrêté du 4 novembre 1975 modifié portant réglementation de l'utilisation de certains matériaux et produits dans les établissements recevant du public et l'instruction du 1^{er} décembre 1976 s'y rapportant. | | | |
| (3) Admissible pour M1 si non substantiel au sens de la définition de l'annexe 1. | | | |

Il est à noter que les exigences de la législation sur la Sécurité Incendie varient suivant l'utilisation donnée à un produit de construction ou d'aménagement. Pour les produits disposés en position verticale, comme dans le cas du dispositif de l'invention, la législation française requiert un classement M2.

Le tableau 2 montre un extrait des résultats de la réaction au feu des différentes compositions d'assemblage testées lors du développement du dispositif de l'invention.

**[Tableau 2]**

| No. | Composition couche centrale absorbante | Classement au feu couche centrale absorbante | Composition Couches externes | Classement au feu couches externes | Classement au feu assemblage |
|---|---|---|---|---|---|
| 1 | Feutre polyester | - | Polyester ignifugé | B-s1,d0 | C-s2,d0 |
| 2 | Feutre polyester ignifugé | B-s1,d0 | Polyester ignifugé | B-s1,d0 | C-s2,d0 |
| 3 | Tissu polyester ignifugée (tissu 1) | M1 | Polyester ignifugé | B-s1,d0 | C-s2,d0 |
| 4 | Tissu polyester ignifugée (tissu 2) | M1 | Polyester ignifugé | B-s1,d0 | C-s2,d0 |
| 5 | Non-tissé ignifugé | M1 | Polyester ignifugé | B-s1,d0 | C-s2,d0 |
| 6 | Tissu coton ignifugé | M1 | Polyester ignifugé | B-s1,d0 | D-s3,d0 |
| 7 | Polyuréthane ignifugé (fournisseur 1) | M1 | Polyester ignifugé | B-s1,d0 | E-s3,d0 |
| 8 | Polyuréthane ignifugé (fournisseur 2) | M1 | Polyester ignifugé | B-s1,d0 | E-s3,d0 |
| 9 | Polyuréthane ignifugé (fournisseur 1) | M1 | Laine ignifugée | C-s3,d0 | E-s3,d0 |
| 10 | Polyuréthane ignifugé (fournisseur 1) | M1 | Mélange viscose FR et de méta-aramide | D-s3,d0 | E-s3,d0 |

De manière inattendue, ces études montrent que malgré la sélection de matériaux ayant tous au moins un classement M1 de départ, l'assemblage avec les couches externes modifie la réaction au feu des matériaux de manière non prévisible. De plus, certains matériaux ont présenté des incompatibilités d'assemblage se traduisant par un aspect non-esthétique du dispositif (matériaux non montrés dans le tableau).

Suite aux essais réalisés, la présente invention propose de réaliser la bande ou le panneau du dispositif avec un matériau comportant au moins trois couches structurelles, et dans lequel les deux couches externes et la couche centrale absorbante sont composées de fibres de polyester, et notamment dans lequel les couches externes sont réalisées à partir de fils de fibres de polyester ignifugé dans la masse.

C'est-à-dire que l'invention propose de réaliser les couches externes à partir de fibres de polyester ignifugé et la couche centrale absorbante dans un matériau textile comportant comme composant majoritaire, en volume et en masse, des fibres de polyester non-ignifugé ou optionnellement ignifugé. En effet, il a été déterminé de manière surprenante que l'utilisation d'une couche centrale en polyester non ignifugé, ne modifie significativement la réaction au feu des bandes du dispositif de l'invention en comparaison de l'utilisation d'une couche centrale absorbante en polyester ignifugé. Le traitement ignifugé sur les couches externes semble donc être suffisant pour contenir la réaction au feu de la couche centrale lorsque celle-ci est composée également de polyester. Bien entendu, il est également possible de réaliser l'invention avec une couche centrale absorbante réalisée à partir de polyester ignifugé.

Le tableau 3 ci-après montre un exemple des propriétés acoustiques obtenues avec un assemblage des deux couches externes réalisées à partir des fibres de polyester ignifugé, d'une épaisseur de 1,2 mm chacune, et un grammage de 330 g/m2, avec différentes couches centrales absorbantes réalisées à partir de polyester ignifugé ou non ignifugé. Les résultats montrent que l'utilisation de polyester dans les couches externes et dans la couche centrale permet d'obtenir des bandes de store ou d'un panneau cloison d'une épaisseur aussi faible que 2,55 mm. Ces stores d'épaisseur réduite répondent aux exigences de la réglementation française en termes de comportement au feu et présentent un coefficient d'absorption pondéré α_{w} d'au moins 0,45. Pour comparaison, une bande comportant les couches externes de l'invention assemblées à une mousse épaisse de polyuréthanne ignifugé de 10 mm présente également un coefficient d'absorption α_{w} de 0,45 avec une épaisseur d'assemblage de 12,4 mm.

**[Tableau 3]**

| Couche centrale | | | Couche externe | Store assemblé | |
|---|---|---|---|---|---|
| Composition fibres | Epaisseur (mm) | Grammage (g/m²) | Type de textile | Epaisseur (mm) | α W |
| Non-tissé polyester ignifugé | 0,3 | 200 | Tricot polyester ignifugé | 2,7 | 0,45 |
| Tissu polyester ignifugée (tissu 1) | 0,15 | 120 | Tricot polyester ignifugé | 2,55 | 0,45 |
| Tissu polyester ignifugée (tissu 2) | 0,15 | 110 | Tricot polyester ignifugé | 2,55 | 0,45 |
| Feutre polyester | 3 | 500 | Tricot polyester ignifugé | 5 | 0.45 |
| Feutre polyester ignifugé | 3 | 500 | Tricot polyester ignifugé | 5 | 0,45 |

Dans un mode de réalisation préféré, la couche centrale absorbante est réalisée en feutre de polyester non ignifugé permettant d'obtenir un coefficient d'absorption α_{w} de 0,45 et de bonnes propriétés d'occultation et réflexion thermique. De préférence, une épaisseur d'environ 3 mm est choisie pour obtenir un aspect esthétique qualitatif et un bon rapport de souplesse/rigidité. Dans ce mode de réalisation, l'épaisseur d'assemblage est inférieure à 7 mm, et de préférence de 5 mm ± 10 %.

D'autre part, les couches externes sont réalisées dans un tissu aéré composé d'un tricot obtenu sur métier chaîne ou Rachel quatre barres avec deux fils de fond alimentant la première passette (I) (notation Rachel) et deux fils d'aspect alimentant les deuxième et troisième passettes (II et III) selon le montage illustré au tableau 4 ci-après, et dans lequel I = numéro de passette, x = maille qui n'existe pas, - = maille envers, O= jeté.

**[Tableau 4]**

| I | II | III |
|---|---|---|
| X | X | X |
| O | X | X |
| - | - | - |
| X | X | X |
| X | 2x | 2x |
| - | - | - |
| X | X | X |
| 2x | X | X |
| - | - | - |
| x | X | X |
| X | O | O |
| - | - | - |

Un tel tricot présente un aspect extérieur textile, une résistance élevée aux déchirures, une bonne déformabilité et est suffisamment opaque pour masquer l'état de surface de la couche absorbante. En particulier, c'est la présence de deux fils sur la même passette qui confère au tricot son aspect de relief particulier. La demande de brevet français N° FR 2 759 386 A1 décrit en détail la réalisation dudit tricot. Dans ce montage, la valeur x est de préférence de deux suivant la notation Rachel.

Cette structure de tricot est réalisée à partir de quatre fils retors en polyester ignifugés dans la masse. Le fil retors est par exemple constitué de deux fils simples de titrage 250 tex pour une torsion comprise entre 500 et 600 T/m. Les fibres constituant chaque fil simple ont par exemple une coupe de 60 mm et un titrage de 3.3 dtex.

Les mailles du tricot obtenu présentent un grammage de l'ordre de 330 g/m².

L'utilisation de ce tricot permet avantageusement de conserver un classement européen de réaction au feu C-s2,d0 lorsque les couches externes sont assemblées à la couche centrale absorbante réalisée à partir du même type des fibres. Les couches externes sont assemblées par exemple au moyen d'une colle vinylique.

Les couches externes comportent également un revêtement externe déperlant empêchant les tâches d'être absorbées ou de s'incruster sur la face extérieure du tricot, offrant ainsi un lavage facile au store en cas de salissures. Dans la présente invention, le revêtement externe déperlant est réalisé avec une membrane discontinue n'obstruant pas les ouvertures de la maille. Cette membrane est appliquée par foulardage et polymérisée dans un four. La membrane est par exemple constituée d'un mélange de résine polyuréthane, résine déperlante et d'autres additifs (mouillant, correcteur de pH, ...).

Un autre objectif de l'invention est que le dispositif acoustique présente des caractéristiques optimales d'absorption acoustique, d'occultation et de réflexion thermique.

Dans un mode de réalisation, le dispositif d'absorption acoustique est un store et l'invention propose d'installer ledit store 1 au moyen d'un rail 2 de fixation comportant une série de fixations mobiles 3 dans une glissière, et de clipser les bandes 4 verticales du store avec une distance d'écartement inférieure à 10 mm, et de préférence inférieure à 5 mm entre une extrémité supérieure des bandes et une extrémité inférieure du rail.

La diminution de la distance d'écartement entre le rail 2 et les bandes 4 du store permet de couvrir une surface plus importante de l'espace à occulter, et donc d'optimiser les performances d'occultation, d'absorption acoustique et de réflexion thermique du store lorsqu'il est installé pour recouvrir une ouverture.

Dans un mode de réalisation préféré, la distance d'écartement entre une extrémité supérieure des bandes 4 du store et une extrémité inférieure du rail 2 est de 4 mm, cette distance correspondant à la valeur minimale avec laquelle le store conserve une mobilité et une installation aisée. Cette fixation dite « haute » peut être obtenue au moyen d'une barrette de fixation comportant une lumière de clipsage dans une zone interne de ladite barrette.

La figure 2 illustre un exemple d'un mode préféré de réalisation de la barrette 100 ayant une forme sensiblement rectangulaire et plate. Pour les effets de la description, un côté inférieur et un côté supérieur de la barrette 100 sont définis lorsque la barrette est mise en position verticale, avec une face avant FA et une face arrière de la barrette 100 positionnées suivant un axe vertical, et avec un axe longitudinal de la barrette positionné suivant un axe horizontal. Afin de permettre une fixation haute du store, le côté supérieur de la barrette 100 comporte la lumière de clipsage 120 dans une zone ou aire interne de la barrette. Par section interne, on entend une aire de la barrette se trouvant à l'intérieur du contour défini par un périmètre sensiblement rectangulaire de la barrette. Par exemple, une face supérieure de la lumière de clipsage 120 est située, sensiblement centrée, à une profondeur P de 4,5 mm de la barrette. Cette profondeur est mesurée du haut vers le bas, et à partir du côté supérieur de la barrette mise en position verticale.

La barrette 100 comporte également, dans une extrémité supérieure, un dégagement central 110 situé au-dessus de la lumière de clipsage 120 pour faciliter le clipsage de la barrette. Ce dégagement comporte des parois obliques ouvertes et sa profondeur définit les dimensions d'une barre de suspension 130 formée entre la face supérieure de la lumière de clipsage et la face inférieure du dégagement. Par exemple, pour une profondeur du dégagement central de 3 mm et de 4,5 mm pour la face supérieure de la lumière de clipsage, une hauteur de la barre de suspension est de 1,5 mm. Avantageusement, cette hauteur permet une compatibilité de clipsage de la barre avec les systèmes de clipsage universaux pour stores. De plus, les parois obliques du dégagement central de la barrette facilitent le clipsage des bandes sur les fixations du rail de suspension.

De préférence, la barrette de fixation est réalisée en acier et de couleur similaire à celle de la couche centrale.

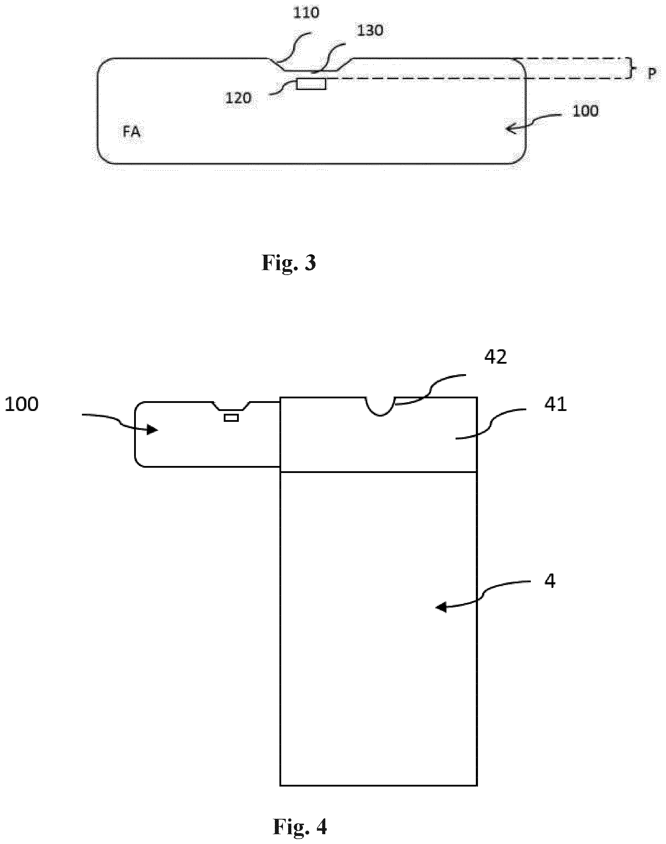

Comme illustré à la figure 3, la barrette de fixation 100 est introduite dans un ourlet 41 supérieur des bandes 4 du store. Cet ourlet comporte également une ouverture 42 centrale se superposant avec la lumière de clipsage 120 de la barrette 100 et son dégagement central 130.

Les performances d'occultation, ainsi que de réflexion thermique ont été déterminées pour le store de l'invention. En particulier, les performances d'un store comportant une pluralité de bandes verticales ont été comparées avec les performances d'une plaque pleine. Le tableau 4 ci-dessous montre les résultats de ces tests réalisés suivant la norme NF EN 410 :2011 et NF EN 14500 :2008. Comme il peut être observé, il n'y a pas de différence significative entre les performances du store dans sa configuration en bandes verticales, et une plaque de la même matière pleine.

**[Tableau 4]**

| Coloris Graphite | | Store - plaque pleine | Store - pluralité des bandes |
|---|---|---|---|
| Spectre visible (380-780nm) Problématique lumière | Absorption | >97 | >95 |
| | Réflexion | 2 | 3 |
| | Transmission | <1 | <2 |
| Spectre solaire (280-2500 nm) Problématique thermique | Absorption | >74 | >74 |
| | Réflexion | 25 | 24 |
| | Transmission | <1 | <2 |

Le dispositif de l'invention est donc très avantageux en ce qu'il permet d'obtenir une excellente occultation à la lumière et des valeurs de réflexion thermiques remarquables pour un store. Lorsque le store comporte une pluralité de bandes fixée au rail du store au moyen de la barrette de fixation décrite ci-avant, le store permet d'obtenir une occultation équivalente à la couverture totale d'une ouverture avec le même matériau, tout en conservant la possibilité de moduler cette occultation et de tamiser la lumière si besoin en modifiant la position des bandes du store. Bien entendu, des excellentes performances en occultation et réflexion thermique sont également obtenues lorsque le dispositif d'absorption acoustique de l'invention est réalisé sous la forme d'un store à une seule bande ou un panneau cloison du type japonais.

## Revendications

1. Dispositif d'absorption acoustique et occultant comportant au moins une bande (4) verticale, ou un panneau vertical, réalisé dans un matériau comportant au moins trois couches structurelles, une couche centrale (10) réalisée dans un matériau absorbant acoustique, et deux couches externes (20) réalisées dans un matériau tricoté présentant une transparence acoustique, lesdites couches externes étant rapportées d'une part et de l'autre de la couche centrale (10), **caractérisée en ce que** :
- les deux couches externes (20) sont réalisées à partir de fils de fibres de polyester ignifugé ; et
- la couche centrale (10) absorbante est réalisée en feutre de polyester comportant comme composant majoritaire des fibres de polyester ; et **en ce qu'**une épaisseur d'assemblage desdites trois couches structurelles est inférieur à 7 mm.

2. Dispositif d'absorption acoustique suivant l'une des revendications précédentes, dans lequel la couche centrale (10) est réalisée à partir de fibres de polyester non ignifugé ou à partir de fibres de polyester ignifugé

3. Dispositif d'absorption acoustique suivant l'une des revendications précédentes, dans lequel la couche centrale (10) présente une épaisseur de 0,15 à 5 mm, et les couches externes (20) présentent une épaisseur chacune de 1 à 1,5 mm.

4. Dispositif d'absorption acoustique suivant l'une des revendications précédentes, dans lequel la couche centrale (10) présente une épaisseur de 3 mm.

5. Dispositif d'absorption acoustique suivant l'une des revendications précédentes, dans lequel les couches externes (20) sont constituées d'un tricot chaîne ou Rachel obtenu sur quatre barres avec deux fils de fond alimentant la première passette (notation Rachel) et deux fils d'aspect alimentant les deuxième et troisième passettes (II et III).

6. Dispositif d'absorption acoustique suivant l'une des revendications précédentes, dans lequel les couches externes (20) sont intrinsèquement ignifugées et comportent un revêtement externe déperlant.

7. Dispositif d'absorption acoustique suivant l'une des revendications précédentes, dans lequel le dispositif d'absorption acoustique est un store comportant au moins une bande verticale, un rail (2) de suspension comportant au moins une fixation (3) par clipsage mobile maintenant ladite au moins une bande (4) verticale, et pour lequel une distance d'écartement entre une extrémité inférieure du rail (2) de suspension et une extrémité supérieure de l'au moins une bande verticale est ≤ à 5 mm, et de préférence de 4 mm.

8. Dispositif d'absorption acoustique suivant la revendication 8, dans lequel le store comporte une barrette (100) de fixation de forme sensiblement rectangulaire et comportant, dans une extrémité supérieure, un dégagement central (110) pourvu des parois obliques ouvertes et une lumière de clipsage (120) située en dessous dudit dégagement central (110).

9. Dispositif d'absorption acoustique suivant la revendication 9, dans lequel l'au moins une bande (4) verticale comporte un ourlet (41) supérieur dans lequel est insérée ladite barrette (100) de fixation, ledit ourlet étant pourvu d'une ouverture centrale (42) se superposant avec la lumière de clipsage (120) et le dégagement central (110) de la barrette (100).

10. Dispositif d'absorption acoustique suivant l'une des revendications 9 ou 10, dans lequel la lumière de clipsage (120) est située à une profondeur P de la barrette (100) déterminant une distance d'écartement de 4 mm entre l'extrémité inférieure du rail (2) de fixation et l'extrémité supérieure de la bande (4) verticale lorsque ladite bande est suspendue au rail.

## Patentansprüche

1. Schallabsorptions- und Verdunklungsvorrichtung, die mindestens einen vertikalen Streifen (4) oder ein vertikales Paneel umfasst, das aus einem Material hergestellt ist, das mindestens drei Strukturschichten umfasst, eine mittlere Schicht (10), die aus einem schallabsorbierenden Material hergestellt ist, und zwei äußere Schichten (20), die aus einem gewirkten Material hergestellt sind, das eine Schalldurchlässigkeit aufweist, wobei die äußeren Schichten auf beiden Seiten der mittleren Schicht (10) angebracht sind, **dadurch gekennzeichnet, dass**:
- die zwei äußeren Schichten (20) auf Grundlage von flammhemmend ausgerüsteten Polyesterfasergarnen hergestellt sind; und
- die absorbierende mittlere Schicht (10) aus Polyesterfilz hergestellt ist, der als Hauptbestandteil Polyesterfasern umfasst; und dadurch, dass eine Dicke der Anordnung der drei Strukturschichten weniger als 7 mm beträgt.

2. Schallabsorptionsvorrichtung nach einem der vorstehenden Ansprüche, wobei die mittlere Schicht (10) auf Grundlage von nicht flammhemmend ausgerüsteten Polyesterfasern oder auf Grundlage von flammhemmend ausgerüsteten Polyesterfasern hergestellt ist.

3. Schallabsorptionsvorrichtung nach einem der vorstehenden Ansprüche, wobei die mittlere Schicht (10) eine Dicke von 0,15 bis 5 mm aufweist, und die äußeren Schichten (20) jeweils eine Dicke von 1 bis 1,5 mm aufweisen.

4. Schallabsorptionsvorrichtung nach einem der vorstehenden Ansprüche, wobei die mittlere Schicht (10) eine Dicke von 3 mm aufweist.

5. Schallabsorptionsvorrichtung nach einem der vorstehenden Ansprüche, wobei die äußeren Schichten (20) aus einem Ketten- oder Raschelgewirk bestehen, das auf vier Stangen mit zwei Grundgarnen, die die erste Lochnadel (Rachel) versorgen, und zwei Effektgarnen, die die zweite und die dritte Lochnadel (II und III) versorgen, erhalten wird.

6. Schallabsorptionsvorrichtung nach einem der vorstehenden Ansprüche, wobei die äußeren Schichten (20) inhärent flammhemmend ausgerüstet sind und eine wasserabweisende äußere Beschichtung umfassen.

7. Schallabsorptionsvorrichtung nach einem der vorstehenden Ansprüche, wobei die Schallabsorptionsvorrichtung ein Vorhang ist, der mindestens einen vertikalen Streifen umfasst, wobei eine Aufhängeschiene (2), die mindestens eine bewegliche Clipbefestigung (3) umfasst, den mindestens einen vertikalen Streifen (4) hält, und wobei ein Abstand zwischen einem unteren Ende der Aufhängeschiene (2) und einem oberen Ende des mindestens einen vertikalen Streifens ≤ 5 mm ist, und bevorzugt 4 mm beträgt.

8. Schallabsorptionsvorrichtung nach Anspruch 8, wobei der Vorhang eine Befestigungsleiste (100) umfasst, die von im Wesentlichen rechteckiger Form ist und an einem oberen Ende eine mittlere Aussparung (110), die mit offenen schrägen Wänden versehen ist, und ein Cliploch (120) umfasst, die sich unter der mittleren Aussparung (110) befindet.

9. Schallabsorptionsvorrichtung nach Anspruch 9, wobei der mindestens eine vertikale Streifen (4) einen oberen Saum (41) umfasst, in den die Befestigungsleiste (100) eingeführt ist, wobei der Saum mit einer mittleren Öffnung (42) versehen ist, die sich mit dem Cliploch (120) und der mittleren Aussparung (110) der Leiste (100) überlappt.

10. Schallabsorptionsvorrichtung nach einem der Ansprüche 9 oder 10, wobei sich das Cliploch (120) auf einer Tiefe P der Leiste (100) befindet, die einen Abstand von 4 mm zwischen dem unteren Ende der Befestigungsschiene (2) und dem oberen Ende des vertikalen Streifens (4) bestimmt, wenn der Streifen an der Schiene aufgehängt ist.

## Claims

1. Acoustic absorption and shading device including at least one vertical strip (4), or a vertical panel, made of a material including at least three structural layers, a central layer (10) made of a sound-absorbing material, and two outer layers (20) made of a knitted material with acoustic transparency, said outer layers being attached on either side of the central layer (10), **characterized in that**:
- the two outer layers (20) are made from flame-retardant polyester fibre yarns; and
- the absorbing central layer (10) is made of polyester felt including polyester fibres as its main component; and **in that** an assembly thickness of said three structural layers is less than 7 mm.

2. Acoustic absorption device according to one of the preceding claims, wherein the central layer (10) is made from non-flame-retardant polyester fibres or from flame-retardant polyester fibres.

3. Acoustic absorption device according to one of the preceding claims, wherein the central layer (10) has a thickness of 0.15 to 5 mm, and the outer layers (20) each have a thickness of 1 to 1.5 mm.

4. Acoustic absorption device according to one of the preceding claims, wherein the central layer (10) has a thickness of 3 mm.

5. Acoustic absorption device according to one of the preceding claims, wherein the outer layers (20) consist of a warp or Raschel knit fabric obtained on four bars with two ground yarns feeding the first guide needle (Raschel notation) and two aspect yarns feeding the second and third guide needles (II and III).

6. Acoustic absorption device according to one of the preceding claims, wherein the outer layers (20) are inherently flame-retardant and have a water-repellent outer coating.

7. Acoustic absorption device according to one of the preceding claims, wherein the acoustic absorption device is a blind having at least one vertical strip, a suspension rail (2) having at least one mobile clip-on fastening (3) holding said at least one vertical strip (4), and for which a distance between a lower end of the suspension rail (2) and an upper end of the at least one vertical strip is ≤ 5 mm, and preferably 4 mm.

8. Acoustic absorption device according to claim 8, wherein the blind has a fixing bar (100) with a substantially rectangular shape and having, in an upper end, a central recess (110) provided with open oblique walls and a clipping slot (120) located below said central recess (110).

9. Acoustic absorption device according to claim 9, wherein the at least one vertical strip (4) has an upper hem (41) in which said fixing bar (100) is inserted, said hem being provided with a central opening (42) overlapping with the clipping slot (120) and the central recess (110) of the bar (100).

10. Acoustic absorption device according to either one of claims 9 or 10, wherein the clipping slot (120) is located at a depth P of the bar (100) determining a distance of 4 mm between the lower end of the fixing rail (2) and the upper end of the vertical strip (4) when said strip is suspended from the rail.
